# EUROPEAN PATENT APPLICATION

(11) **EP 2 065 794 A1**
(43) Date of publication of application: **03.06.2009**
(21) Application number: 07121445.6
(22) Date of filing: 23.11.2007
(51) Int. Cl.: G06F 3/044, G06F 3/033

(54) **Touch sensor for a display screen of an electronic device**

(71) Applicant: Research In Motion Limited, Waterloo, Ontario N2L 3W8 (CA)
(72) Inventor: Lowles, Robert, Waterloo, Ontario N2T 2J5 (CA); Ma, ZhongMing, Waterloo, Ontario N2V 2A3 (CA); Hui, Edward, Waterloo, Ontario N2T 2J3 (CA)
(74) Representative: Rickard, David John

(57) **Abstract**

A touch sensor for mounting over a display screen of an electronic device is provided. The touch senor includes: an elongate input pad formed in a layer of transparent conductive material on a transparent substrate, the input pad tapering from a broad end to a narrow end to provide an input pad capacitance that varies with location of a touch over the input pad; and, a contact for coupling the input pad to a processor.

## Description

This application relates generally to the field of touch sensors for electronic devices, and more specifically, to touch sensors for display screens of handheld, wireless, and other electronic devices.

Handheld electronic devices may have a number of different configurations. Examples of such devices include personal data assistants ("PDAs"), handheld computers, two-way pagers, cellular telephones, and the like. Many handheld electronic devices also feature wireless communication capability, although many other handheld electronic devices are stand-alone devices that are functional without communication with other devices.

Such handheld electronic devices are generally intended to be portable, and thus are of a relatively compact configuration in which keys and other input structures often perform multiple functions under certain circumstances or may otherwise have multiple aspects or features assigned thereto.

In addition to using keys on a keypad, handheld electronic devices may also use a touchscreen. A touchscreen is a display screen overlay which provides the ability to display and receive information on the same display screen. The effect of the overlay is to allow a display screen to be used as an input device, possibly removing the keys on the keypad as the primary input device for interacting with the display screen's content. Display screens with integrated touchscreens can make computers and handheld electronic devices more useable. A touchscreen or touchscreen system typically includes a touch sensor, a controller or processor, and accompanying software. The controller communicates user selections to the processor of the electronic device in which the touchscreen is used.

One problem with existing LCD touchscreen displays relates to the arrangement of their touch sensors. In existing LCD touchscreen displays, in order to provide a number of input pads in an X/Y matrix arrangement, the touch sensor typically consists of two stacked indium tin oxide ("ITO") polyethylene terephthalate ("PET") polyester film layers. The first ITO PET film layer may include a number of rows of input pads (X inputs), the input pads in each row being connected in series. The second ITO PET film layer may include a number of columns of input pads (Y inputs), the input pads in each column being connected in series. However, this arrangement has several problems as follows.

First, the use of two ITO PET film layers increases the overall material and production costs of the touch sensor. In addition, the two stacked ITO PET film layers reduce the light transitivity and optical performance of the LCD touchscreen display.

Second, for on-screen keypad applications, it is difficult to distinguish between two adjacent icons. To achieve higher resolution, the X/Y matrix has to be expanded by adding additional rows and/or columns of input pads. However, the addition of more rows and/or columns means that additional input channels are required for the controller (i.e., each row or column requiring a separate input channel), which in some cases, is not possible. Additional traces for the additional row and column input channels translates into a requirement for additional routing space around the perimeter of the display which in turn results in a larger display. However, in many applications, larger displays cannot be accommodated.

Third, the use of additional input channels requires increased scanning times for the input pads and hence increased response times. In applications involving haptic feedback or gesture-based input, for example, increased response times are often not acceptable.

Fourth, it can be difficult to align icons presented on the display with the appropriate input pads of the X/Y matrix. As such, finger shadow effects may lead to the selection of wrong inputs.

Fifth, the increased density of controller input channel traces required for a higher resolution X/Y matrix effectively limits the size of the display that can be used. For example, a 1.8" display may be implemented at high resolution but a 3.5" display may not be practical as the increased density of the required controller input channel traces may simply take up too much space.

A need therefore exists for an improved touch sensor for a display screen of a handheld, wireless, or other electronic device. Accordingly, a solution that addresses, at least in part, the above and other shortcomings is desired.

### GENERAL

According to one aspect of the application, there may be provided a touch sensor for mounting over a display screen of an electronic device, comprising: an elongate input pad formed in a layer of transparent conductive material on a transparent substrate, the input pad tapering from a broad end to a narrow end to provide an input pad capacitance that varies with location of a touch over the input pad; and, a contact for coupling the input pad to a processor.

According to another aspect of the application, there may be provided a touch sensor keypad for mounting over a display screen of an electronic device, comprising: at least one elongate input pad formed in a layer of transparent conductive material on a transparent substrate, the input pad tapering from a broad end to a narrow end to provide a respective input pad capacitance for each of a plurality of locations of a touch over the input pad; and, a contact for coupling the input pad to a processor; wherein the input pad forms a column or row of the keypad; and, wherein each of the plurality of locations of the touch corresponds to a respective key in the column or row of the keypad; whereby the input pad provides multi-touch functionality for the column or row of the keypad.

### BRIEF DESCRIPTION OF THE DRAWINGS

Features and advantages of the embodiments of the present application will become apparent from the following detailed description, taken in combination with the appended drawings, in which:

FIG. 1 is a front view illustrating a handheld electronic device in accordance with an embodiment of the application;

FIG. 2 is a block diagram illustrating a processing system for the device of FIG. 1;

FIG. 3 is a top view illustrating a touch sensor and transparent cover for the device of FIG. 1;

FIG. 4 is a screen capture illustrating a keypad presented on the display screen of FIG. 1;

FIG. 5 is a screen capture illustrating a multimedia controller presented on the display screen of FIG. 1;

FIG. 6 is a top view illustrating an alternate touch sensor for the device of FIG. 1; and,

FIG. 7 is a top view illustrating a portion of an alternate touch sensor for the device of FIG. 1.

It will be noted that throughout the appended drawings, like features are identified by like reference numerals.

### DESCRIPTION OF PREFERRED EMBODIMENTS

In the following description, details are set forth to provide an understanding of the application. In some instances, certain software, circuits, structures and techniques have not been described or shown in detail in order not to obscure the application. Embodiments of the present application may be implemented in any computer programming language provided that the operating system of the data processing system provides the facilities that may support the requirements of the application. Any limitations presented would be a result of a particular type of operating system or computer programming language and would not be a limitation of the present application.

According to one embodiment, there is provided a touch sensor for mounting over a display screen of an electronic device, comprising: an elongate input pad formed in a layer of transparent conductive material on a transparent substrate, the input pad tapering from a broad end to a narrow end to provide an input pad capacitance that varies with location of a touch over the input pad; and, a contact for coupling the input pad to a processor.

According to another embodiment, there is provided a touch sensor keypad for mounting over a display screen of an electronic device, comprising: at least one elongate input pad formed in a layer of transparent conductive material on a transparent substrate, the input pad tapering from a broad end to a narrow end to provide a respective input pad capacitance for each of a plurality of locations of a touch over the input pad; and, a contact for coupling the input pad to a processor; wherein the input pad forms a column or row of the keypad; and, wherein each of the plurality of locations of the touch corresponds to a respective key in the column or row of the keypad; whereby the input pad provides multi-touch functionality for the column or row of the keypad.

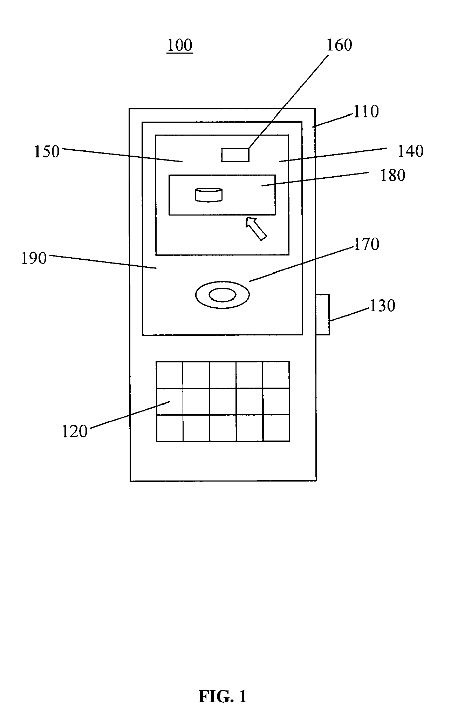

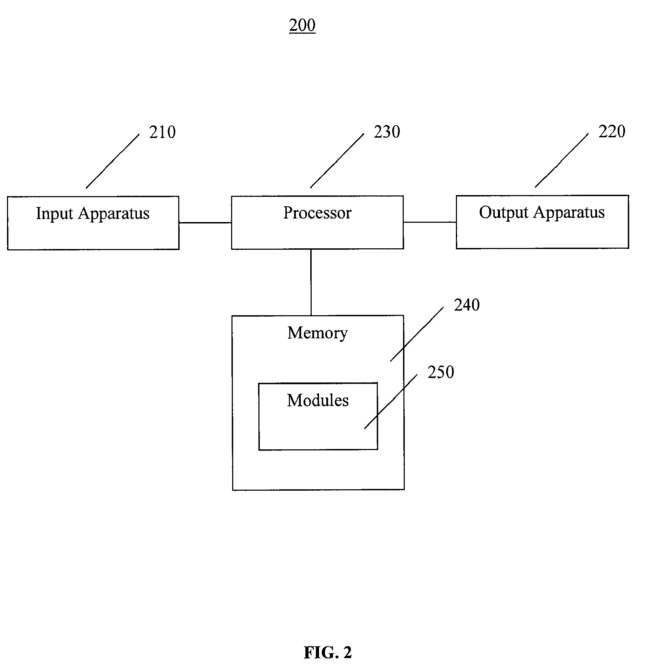

FIG. 1 is a front view illustrating a handheld electronic device **100** in accordance with an embodiment of the application. And, FIG. 2 is a block diagram illustrating a processing system **200** for the device **100** of FIG. 1. The exemplary handheld electronic device **100** includes a housing **110** in which is disposed a processing system **200** that includes an input apparatus **210,** an output apparatus **220,** a processor (or controller) **230,** memory **240,** and one or more hardware and/or software modules **250.** The processor **230** may be, for example and without limitation, a microprocessor and is responsive to inputs from the input apparatus **210** and provides output signals to the output apparatus **220.** The processor **230** also interfaces with the memory **240.**

The handheld electronic device **100** may be a two-way communication device having voice and/or advanced data communication capabilities, including the capability to communicate with other computer systems. Depending on the functionality provided by the device **100,** it may be referred to as a data messaging device, a two-way pager, a cellular telephone with data messaging capabilities, a wireless Internet appliance, a data communication device (with or without telephony capabilities), a wireless fidelity ("Wi-Fi") device, a wireless local area network ("WLAN") device, a wireless device, a handheld device, or a wireless handheld device.

According to one embodiment, the input apparatus **210** may include a keypad **120,** a thumbwheel **130** or other input device such as a trackball, various buttons, etc., and a touchscreen **140.** In addition to the keypad **120,** the thumbwheel **130** can serve as another input member since the thumbwheel **130** is capable of being rotated and depressed generally toward the housing **110.** Rotation of the thumbwheel **130** provides selection inputs to the processor **230,** while depression of the thumbwheel **130** provides another selection input to the processor **230.**

The output apparatus **220** includes a display screen **150** (e.g., a liquid crystal display ("LCD")) upon which can be provided an output **180** such as a graphical user interface ("GUI"), a speaker **170,** etc. An exemplary GUI **180** is shown on the display screen **150** in FIG. 1. The display screen **150** has associated circuitry and a controller or processor (e.g., **230, 240, 250)** for receiving information from the processor of the handheld electronic device **100** for presentation.

The processor **230** is coupled to the input apparatus **210,** output apparatus **220,** and memory **240** for receiving user commands or queries and for displaying the results of these commands or queries to the user on the display screen **150.** To provide a user-friendly environment to control the operation of the device **100,** operating system ("O/S") software modules **250** resident on the device **100** provide a basic set of operations for supporting various applications typically operable through the GUI **180** and supporting GUI software modules **250.** For example, the O/S provides basic input/output system features to obtain input from the keypad **120,** the thumbwheel **130,** and the like, and for facilitating output to the user through the display screen **150,** the speaker **170,** etc. Though not shown, one or more applications for managing communications or for providing personal digital assistant like functions may also be included. According to one embodiment, the device **100** is provided with hardware and/or software modules **250** for facilitating and implementing various additional functions.

A user may interact with the device **100** and its various software modules **250** using the GUI **180.** GUIs are supported by common operating systems and provide a display format which enables a user to choose commands, execute application programs, manage computer files, and perform other functions by selecting pictorial representations known as icons, or items from a menu through use of an input or pointing device such as a thumbwheel **130** and keypad **120.** In general, a GUI is used to convey information to and receive commands from users and generally includes a variety of GUI objects or controls, including icons, toolbars, drop-down menus, pop-up menus, text, dialog boxes, buttons, and the like.

A user typically interacts with a GUI **180** presented on a display screen **150** by using an input or pointing device (e.g., a thumbwheel **130,** a keypad **120,** etc.) to position a pointer or cursor over an object (i.e., "pointing" at the object) and by "clicking" on the object (e.g., by depressing the thumbwheel **130,** by depressing a button on the keypad **120,** etc.). This is often referred to as a point-and-click operation or a selection operation. Typically, the object may be hi-lighted (e.g., shaded) when it is pointed at.

Typically, a GUI based system presents application, system status, and other information to the user in "windows" appearing on the display screen **150.** A window is a more or less rectangular area within the display screen **150** in which a user may view an application or a document. Such a window may be open, closed, displayed full screen, reduced to an icon, increased or reduced in size, or moved to different areas of the display screen **150.** Multiple windows may be displayed simultaneously, such as: windows included within other windows, windows overlapping other windows, or windows tiled within the display area.

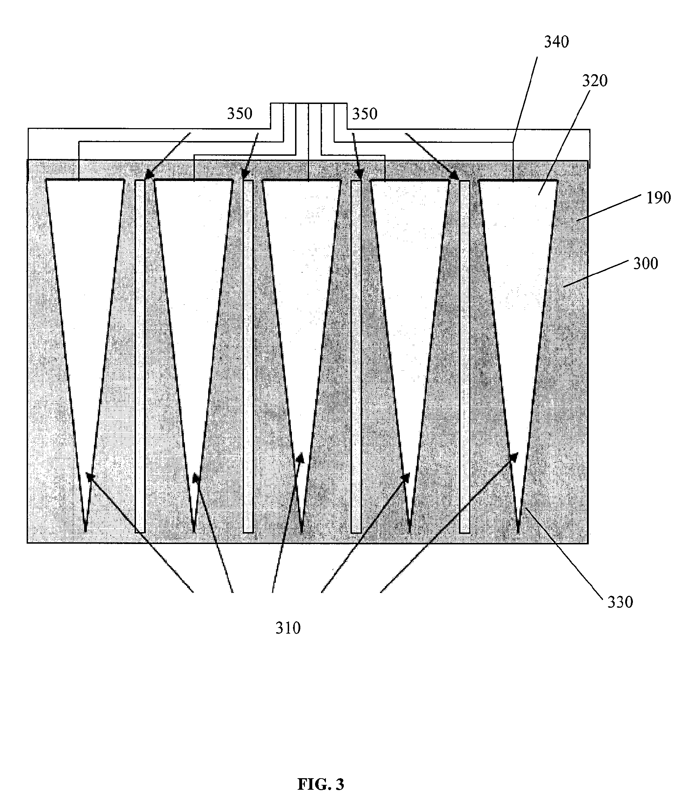

The display screen **150** of the device **100** has touchscreen capability provided by the touchscreen **140.** The touchscreen **140** has a touch sensor **(300** in FIG. 3) positioned over top of display screen **150** or integrated into the display screen **150.** The display screen **150** and touch sensor **300** may be protected by a transparent cover or lens **190** positioned over the touch sensor **300** and display screen **150** or integrated into the display screen **150** or touch sensor **300.**

Also shown on the display screen **150** as part of output **180** is a button or slidebar icon **160.** The button or slidebar icon **160** may be touched by a user to generate an input through operation of the touchscreen **140.** By touching the button or slidebar icon **160,** for example, an input may be sent to the processor **230** to initiate an operation (e.g., sending a text message, etc.). The touchscreen **140** has associated circuitry and a controller or processor (e.g., **230, 240, 250)** for determining where the user's touch was made on the sensor **300** and for sending the coordinates of the touch to the processor of the handheld electronic device **100** to determine a corresponding operation (e.g., the sending of the text message, etc.). In this way, the device **100** supports touchscreen functionality.

The memory **240** can be any of a variety of types of internal and/or external storage media such as, without limitation, RAM, ROM, EPROM(s), EEPROM(s), and the like that provide registers for data storage such as in the fashion of an internal storage area of a computer, and can be volatile memory or non-volatile memory. As shown in FIG. 2, the memory **240** is in electronic communication with the processor **230.** The memory **240** additionally includes a number of modules **250** for the processing of data. The modules **250** can be in any of a variety of forms such as, without limitation, software, firmware, hardware, and the like. The one or more modules **250** may be executed or operated to perform methods of the present application as well as other functions that are utilized by the handheld electronic device **100.** Additionally, the memory **240** can also store a variety of databases such as, without limitation, look-up tables, a language database, etc.

Thus, the handheld electronic device **100** includes computer executable programmed instructions for directing the device **100** to implement the embodiments of the present application. The programmed instructions may be embodied in one or more hardware or software modules **250** resident in the memory **240** or processing system **200** of the device **100.** Alternatively, the programmed instructions may be embodied on a computer readable medium (such as a CD disk or floppy disk) which may be used for transporting the programmed instructions to the memory **240** of the device **100.** Alternatively, the programmed instructions may be embedded in a computer-readable signal or signal-bearing medium that is uploaded to a network by a vendor or supplier of the programmed instructions, and this signal or signal-bearing medium may be downloaded through an interface (e.g., **210)** to the device **100** from the network by end users or potential buyers.

FIG. 3 is a top view illustrating a touch sensor **300** and transparent cover **190** for the device **100** of FIG. 1. The touch sensor **300** includes at least one input pad (or button or slider) **310** formed in a layer of transparent conductive material (e.g., ITO, a conductive polymer, etc.) on a transparent substrate (e.g., a PET film, a glass, etc.). The input pad **310** tapers from a broad end **320** down to a narrow end **330.** The taper of the input pad **310** provides a capacitance that varies with location of touch along the input pad **310.** In particular, if a user touches the input pad **310** at its broad end **320,** the impact on the electric field of the input pad **310** is larger and hence the touch has a larger effect on the capacitance of the input pad **310.** In addition, if a user touches the input pad **310** at its narrow end **330,** the impact on the electric field of the input pad **310** is smaller and hence the touch has a smaller effect of on the capacitance of the input pad **310.** The capacitance of the input pad **310** when touched thus provides an indication of the location of the touch along the input pad **310.**

The input pad **310** includes a contact **340** for coupling the input pad **310** to a controller or processor **230.** The contact **340** may be located at the broad end **320** of the input pad **340** as shown in FIG. 3 or at the narrow end **330** of the input pad **310.** Each contact **340** is routed via a trace (e.g., a silver trace, etc.) along the edge of the display screen **150** to a tail connector for coupling to the processor **230.** The processor **230** receives a signal indicative of the capacitance from the input pad **310** and determines the location of touch from the capacitance. This may be performed by using a look-up table, for example. The processor **230** may include functionality similar to, for example, an AD7147 capacitance sensing integrated circuit ("IC") available from Analog Devices^{™}. This functionality may be included in the device's processor **230** or in a separate device coupled to the processor **230.**

In FIG. 3, the input pads **310** have an isosceles triangle shape. However, the input pads **310** may have any tapered shape (e.g., right triangle shaped, etc.) having a broad end **320** and a narrow end **330.** Also in FIG. 3, the input pads **310** are shown as being vertically arranged (i.e., broad end **320** up, narrow end **330** down). However, the input pads **310** may also be arranged horizontally (i.e., broad end **320** to the right or left, narrow end **330** to the left or right) or at any angle (e.g., broad end **320** down, narrow end **330** up). Furthermore, in FIG. 3, five input pads **310** are shown. However, the number of input pads **310** may vary depending on the application.

Also shown in more detail in FIG. 3 is the transparent cover or lens **190** for the touch sensor **300** and display screen **150.** The lens **190** has ridges (or ribs) **350** formed thereon for guiding a user's finger between adjacent input pads **310.** Each ridge **350** extends between the broad ends **320** and the narrow ends **330** of adjacent input pads **310.** The ridges **350** may be formed on the transparent cover or lens **190** by injection moulding. The transparent cover or lens **190** may then be laminated to the sensor **300** using an optically clear adhesive.

When touched, the capacitance of the input pad **310** provides an indication of the location of the touch along the input pad **310.** As such, the input pad **310** may be used to initiate multiple operations via multiple icons **160** displayed over the input pad **310** on the display screen **150.** Recall, of course, that the input pad **310** is transparent when formed on a transparent substrate.

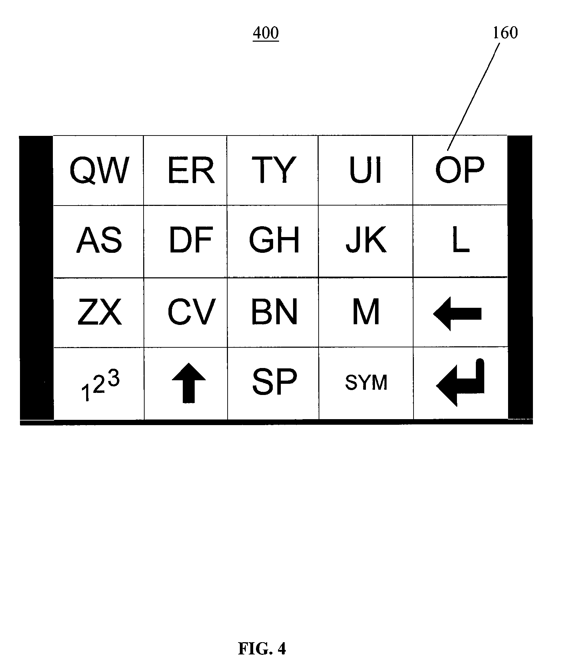

FIG. 4 is a screen capture illustrating a keypad **400** presented on the display screen **150** of FIG. 1. In FIG. 4, various icons **160** are presented in rows and columns. Each column of icons (e.g., TY, GH, BN, SP) is associated with a single input pad **310.** Because the capacitance of the input pad **310** varies from top **320** to bottom **330,** detection of which icon **160** a user has selected is possible by associating the capacitance value of the touch with a location along the input pad **310** and hence to a position of a selected icon **160** on the display screen **150.**

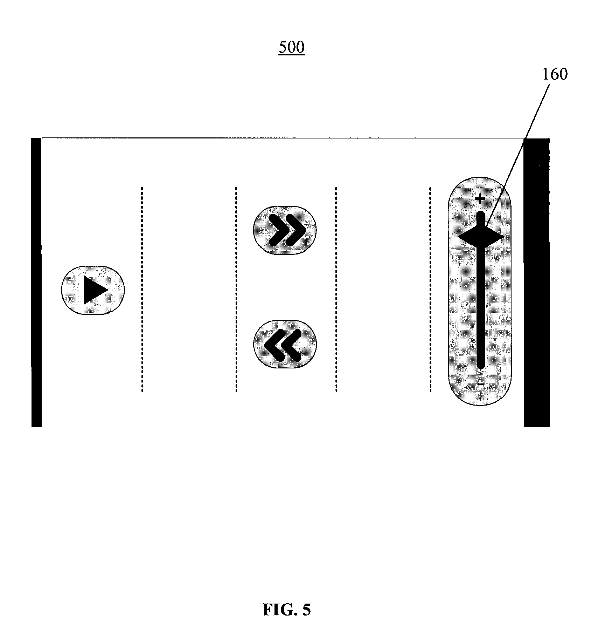

FIG. 5 is a screen capture illustrating a multimedia controller **500** presented on the display screen **150** of FIG. 1. In FIG. 5, various icons **160** are presented in rows and columns. Each column of icons is associated with a single input pad **310.** Again, because the capacitance of the input pad **310** varies from top **320** to bottom **330,** detection of which icon **160** a user has selected is possible by associating the capacitance value of the touch with a location along the input pad **310** and hence to a position of a selected icon **160** on the display screen **150.** The single input pad **310** is particularly useful for implementing slide bar operations through a slide bar icon **160** (e.g., a volume control slide bar). Because the capacitance varies from top **320** to bottom **330** along the input pad **310** when it is touched, a smooth slide bar operation may be readily implemented.

The rows and columns of icons **160** shown in FIGS. 4 and 5 may be considered to be a X/Y matrix. The X position in the matrix is determined by which input pad **310** is touched while the Y position in the matrix is determined by where along the input pad **310** the touch is made.

The columns of icons **160** shown in FIGS. 4 and 5 are aligned with the ridges **350** shown in FIG. 3. The ridges (or ribs) **350** guide the user's finger to appropriate touch locations. A ridge **350** is located between each input pad **310.** The use of the ridges **350** helps to prevent multiple touches on an input pad **310.** In the operation of a typical handheld device **100,** a user uses his or her left-hand and right-hand thumbs to press keys on the keypad **120** of the device **100.** Similarly, a user would use his or her left-hand and right-hand thumbs to select icons **160** presented on the display screen **150** of the device **100.** In this scenario, the use of vertical ridges **350** reduces the chance that a user will select multiple icons **160** in adjacent columns by activating adjacent input pads **310.** Of course, rather than using his or her left-hand and right-hand thumbs, a user may also use his or her fingers (e.g., index finger, forefinger, etc.).

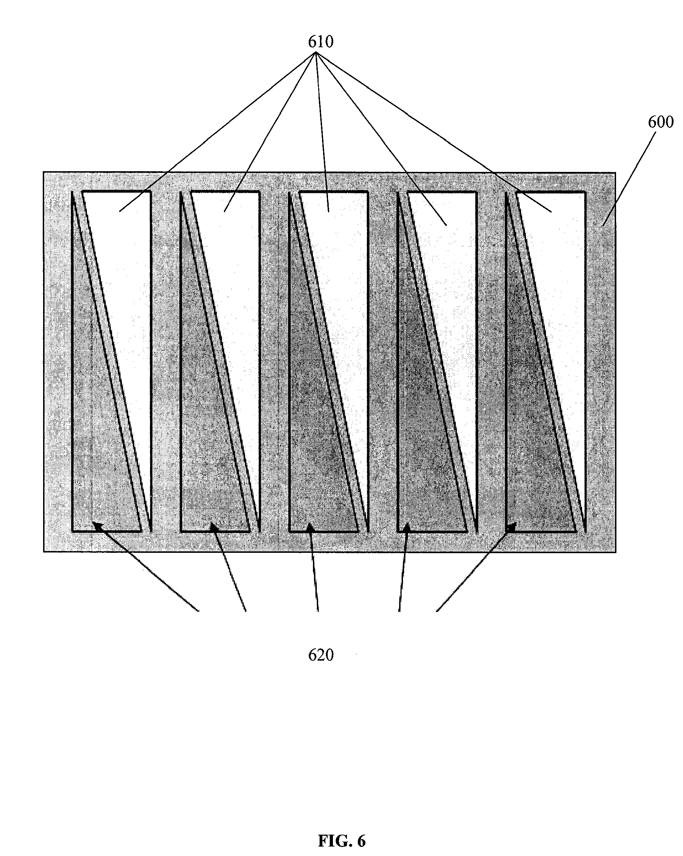

FIG. 6 is a top view illustrating an alternate touch sensor **600** for the device **100** of FIG. 1. In FIG. 6, each input pad **610** has an adjacent correspondingly shaped, but oppositely oriented, reference pad **620.** As such, the capacitance of the reference pad **620** will vary inversely to that of the input pad **610** when both pads **610, 620** are touched at the same location. In FIG. 6, each input pad **610** is right triangle shaped with its broad end towards the top of the sensor **600.** As such, each reference pad **620** is also right triangle shaped but has its broad end towards the bottom of the sensor **600.** By orientating a pair of input and reference pads **610, 620** in this way, the likelihood that both of the input and reference pads **610, 620** in a pair are touched simultaneously, is increased. The input pads **610** and reference pads **620** are formed on the same substrate. That is, only one layer of transparent conductive material is required. The reference pads **620** allow for a reduction in noise effects and for improved touch input differentiation between adjacent input pads **610.** With the sensor **600** of FIG. 6, the location of touch along an input pad **610** (i.e., the Y position in the X/Y matrix referred to above) may be determined by the ratio of the capacitance of the input pad **610** to that of its corresponding reference pad **620** when both are touched. By using this ratio rather than an absolute capacitance value, noise effects and the need for calibration may be reduced making the sensor **600** more tolerant to manufacturing variations.

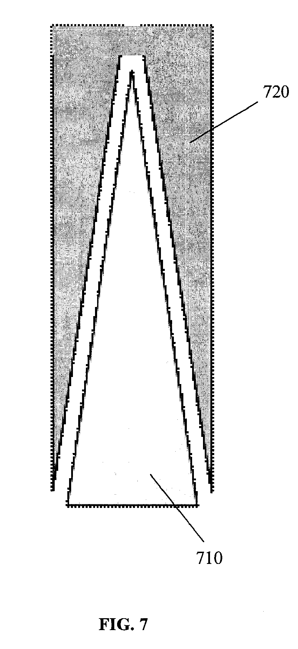

FIG. 7 is a top view illustrating an alternate input and reference pads **710, 720** for the device **100** of FIG. 1. In FIG. 7, the input pad **710** is isosceles triangle shaped as in FIG. 4 and the reference pad **720** is in the form of a pair of joined right triangle shaped sections that are shaped to receive the input pad **710.** Of course, an input pad **710** and its corresponding reference pad **720** may have any complementary shapes that support the use of a ratio of capacitance to determine location of touch along the input pad **710.**

The above embodiments may provide one or more advantages. First, the ridges or ribs **350** formed on the transparent cover or lens **190** of the display screen **150** provide a useful guide for a user's fingers. Second, the tapered input pads **310** allow for the implementation of an X/Y matrix of icons **160** without the use of multiple layers of transparent conductive material. Third, the use of tapered input pads **310** reduces the number of input channels required for a processor **230** implementing an X/Y matrix. For example, only five input channels are required to implement the 5X4 matrix of FIG. 4 while a previous two layer solution would require nine input channels. Fourth, by reducing the number of transparent conductive material layers, the optical performance of the display screen **150** is improved while production costs are reduced. Fifth, a decreased number of processor input channels allows for faster channel scanning.

The embodiments of the application described above are intended to be exemplary only. Those skilled in this art will understand that various modifications of detail may be made to these embodiments, all of which come within the scope of the application.

## Claims

1. A touch sensor for mounting over a display screen of an electronic device, comprising:
an elongate input pad formed in a layer of transparent conductive material on a transparent substrate, the input pad tapering from a broad end to a narrow end to provide an input pad capacitance that varies with location of a touch over the input pad; and,
a contact for coupling the input pad to a processor.

2. The touch sensor of claim 1 and further comprising a transparent cover mounted over the touch sensor for receiving a touch from an implement, the transparent cover having formed thereon one or more elongate ridges for guiding the implement over the input pad between the broad and narrow ends.

3. The touch sensor of claim 1 or claim 2 and further comprising an elongate reference pad formed adjacent to the input pad in the layer of transparent conductive material, the reference pad tapering oppositely to that of the input pad to provide a reference pad capacitance that varies with the location of a touch over the reference pad inversely to that of the input pad capacitance.

4. The touch sensor of any one of the preceding claims
wherein the processor is adapted to receive a signal indicative of the input pad capacitance and to determine the location of a touch from the input pad capacitance.

5. The touch sensor of claim 3 wherein the processor is adapted to receive signals indicative of the input and reference pad capacitances and to determine the location of a touch from a ratio of the input pad capacitance and the reference pad capacitance.

6. The touch sensor of claim 2 wherein the implement is a user's finger.

7. The touch sensor of claim 2, or claim 3 or claim 4 when dependent on claim 2, wherein the input pad and the one or more ridges are arranged vertically with respect to a normal orientation of the electronic device when the touch sensor is assembled therewith.

8. The touch sensor of claim 7 wherein the electronic device is a handheld electronic device and the implement is a user's thumb.

9. The touch sensor of claim 3 or claim 5, or claim 4 or claim 7 when dependent on claim 3, wherein the display screen is a liquid crystal display 'LCD' screen.

10. The touch sensor of claim 9 wherein the transparent conductive material is any of: indium tin oxide 'ITO', or a conductive polymer.

11. The touch sensor of claim 9 or claim 10 wherein the transparent substrate is a polyethylene terephthalate 'PET' polyester film or glass.

12. The touch sensor of any one of the preceding claims
wherein the input pad has an isosceles triangle shape.

13. The touch sensor of claim 3 or claim 5, or any one of claims 4 or 7 to 12 when dependent on claim 3, wherein the input and reference pads have opposing right triangle shapes.

14. The touch sensor of claim 3 or claim 5, or any one of claims 4 or 7 to 13 when dependent on claim 3, wherein the reference pad is shaped to receive the narrow end of the input pad.

15. The touch sensor of claim 3 or claim 5, or any one of claims 4 or 7 to 14 when dependent on claim 3, wherein the reference pad capacitance is complementary to the input pad capacitance.

16. The touch sensor of any one of the preceding claims
wherein the input pad is a plurality of input pads arranged as a keypad, wherein each of the plurality of input pads forms a respective column of the keypad, wherein each of the plurality of input pads has a respective plurality of touch locations, wherein each of the plurality of touch locations corresponds to a respective key in the respective column of the keypad, and wherein each of the plurality of input pads has a respective contact for coupling to the processor, whereby the plurality of input pads provides multi-touch functionality across different columns of the keypad.

17. The touch sensor of any one of claims 1 to 15, wherein the input pad forms a column of a keypad, wherein the input pad has a plurality of touch locations, wherein each of the plurality of touch locations provides a respective input pad capacitance when touched, and wherein each of the plurality of touch locations corresponds to a respective key in the column of the keypad, whereby the input pad provides multi-touch functionality for the column of the keypad.

18. A touch sensor keypad for mounting over a display screen of an electronic device, comprising:
at least one elongate input pad formed in a layer of transparent conductive material on a transparent substrate, the input pad tapering from a broad end to a narrow end to provide a respective input pad capacitance for each of a plurality of locations of a touch over the input pad; and,
a contact for coupling the input pad to a processor;
wherein the input pad forms a column or row of the keypad; and,
wherein each of the plurality of locations of a touch corresponds to a respective key in the column or row of the keypad;
whereby the input pad provides multi-touch functionality for the column or row of the keypad.

19. An electronic device having a touch sensor according to any one of claims 1 to 17, said touch sensor being mounted over a display screen of said electronic device.

## Amended claims

### Amended claims in accordance with Rule 137(2) EPC.

**1.** A touch sensor (300; 600) for mounting over a display screen (150) of an electronic device (100), comprising:
an elongate input pad (310; 610; 710) formed in a layer of transparent conductive material on a transparent substrate, the input pad (310; 610; 710) tapering from a broad end (320) to a narrow end (330) to provide an input pad capacitance that varies with location of a touch over the input pad (310; 610; 710);
a contact for coupling the input pad (310; 610; 710) to a processor (230); and,
a transparent cover (190) mounted over the elongate input pad (310; 610; 710) for receiving a touch from an implement, the transparent cover (190) having formed thereon one or more elongate ridges (350) for guiding the implement over the input pad (310; 610; 710) between the broad and narrow ends.

**2.** The touch sensor (600) of claim 1 and further comprising an elongate reference pad (620; 720) formed adjacent to the input pad (610; 710) in the layer of transparent conductive material, the reference pad (620; 720) tapering oppositely to that of the input pad (610; 710) to provide a reference pad capacitance that varies with the location of a touch over the reference pad (620; 720) inversely to that of the input pad capacitance.

**3.** The touch sensor (300; 600) of any one of the preceding claims wherein the processor (230) is adapted to receive a signal indicative of the input pad capacitance and to determine the location of a touch from the input pad capacitance and a look up table.

**4.** The touch sensor (600) of claim 2 wherein the processor (230) is adapted to receive signals indicative of the input and reference pad capacitances and to determine the location of a touch from a ratio of the input pad capacitance and the reference pad capacitance.

**5.** The touch sensor (300; 600) of any one of the preceding claims wherein the implement is a user's finger.

**6.** The touch sensor (300; 600) of any one of claims 1 to 4
wherein the electronic device is a handheld electronic device and the implement is a user's thumb.

**7.** The touch sensor (300; 600) of any one of the preceding claims, wherein the input pad (310; 610; 710) and the one or more ridges (350) are arranged vertically or horizontally with respect to a normal orientation of the electronic device (100) when the touch sensor (300; 600) is assembled therewith.

**8.** The touch sensor (300; 600) of any one of the preceding claims, wherein the display screen (150) is a liquid crystal display 'LCD' screen.

**9.** The touch sensor (300; 600) of any one of the preceding claims wherein the transparent conductive material is any of: indium tin oxide 'ITO', or a conductive polymer.

**10.** The touch sensor (300; 600) of any one of the preceding claims wherein the transparent substrate is a polyethylene terephthalate 'PET' polyester film or glass.

**11.** The touch sensor (300) of any one of the preceding claims wherein the input pad (310, 710) has an isosceles triangle shape.

**12.** The touch sensor (600) of claim 2, or any one of claims 3 to 10 when dependent on claim 2, wherein the input (610) and reference pads (620) have opposing right triangle shapes.

**13.** The touch sensor of claim 2, or any one of claims 3 to 11 when dependent on claim 2, wherein the reference pad (720) is shaped to receive the narrow end of the input pad (710).

**14.** The touch sensor (600) of claim 2, or any one of claims 3 to 13 when dependent on claim 2, wherein the reference pad capacitance is complementary to the input pad capacitance.

**15.** The touch sensor (300; 600) of any one of the preceding claims wherein the input pad (310; 610; 710) is one of a plurality of input pads (310; 610; 710) arranged adjacently to form a keypad (400), wherein each of the plurality of input pads (310; 610; 710) forms a respective column or row of the keypad (400), wherein each of the plurality of input pads (310; 610; 710) has a respective plurality of touch locations, wherein each of the plurality of touch locations corresponds to a respective key (160) in the respective column or row of the keypad (400), and wherein each of the plurality of input pads (310; 610; 710) has a respective contact (340) for coupling to the processor (230).

**16.** The touch sensor (300; 600) of any one of claims 1 to 14, wherein the input pad (310; 610; 710) forms a column or row of a keypad (400), wherein the input pad (310; 610; 710) has a plurality of touch locations, wherein each of the plurality of touch locations provides a respective input pad capacitance when touched, and wherein each of the plurality of touch locations corresponds to a respective key (160) in the column or row of the keypad (400).

**17.** A touch sensor keypad (400) for mounting over a display screen (150) of an electronic device (100), comprising:
a plurality of adjacent elongate input pads (310; 610; 710) formed in a layer of transparent conductive material on a transparent substrate, each input pad (310; 610; 710) tapering from a broad end (320) to a narrow end (330) to provide a respective input pad capacitance for each of a plurality of locations of a touch over the input pad (310; 610; 710);
a respective contact for coupling each input pad (310; 610; 710) to a processor (230); and,
a transparent cover (190) mounted over the elongate input pads (310; 610; 710) for receiving a touch from an implement, the transparent cover (190) having formed thereon one or more elongate ridges (350) for guiding the implement over each input pad (310; 610; 710) between the broad and narrow ends;
wherein each input pad (310; 610; 710) forms a column or row of the keypad (400); and,
wherein each of the plurality of locations of a touch corresponds to a respective key (160) in the column or row of the keypad (400).

**18.** An electronic device (100) having a touch sensor (300; 600) according to any one of claims 1 to 16, said touch sensor (300; 600) being mounted over a display screen (150) of said electronic device (100).

**19.** An electronic device (100) having a touch sensor keypad (400) according to claim 17, said touch sensor keypad (400) being mounted over a display screen (150) of said electronic device (100).
